# EUROPEAN PATENT APPLICATION

(11) **EP 4 836 071 A1**
(43) Date of publication of application: **04.11.2026**
(21) Application number: 24910702.0
(22) Date of filing: 10.12.2024
(51) Int. Cl.: H01M 10/42, H01M 10/056, H01M 10/058

(54) **SULFIDE SOLID ELECTROLYTE MEMBRANE AND PREPARATION METHOD THEREFOR, AND ALL-SOLID-STATE ALKALI METAL ION BATTERY**

(30) Priority: 26.12.2023 CN 202311799872
(71) Applicant: Hytzer New Energy (Changzhou) Co., Ltd, Changzhou, Jiangsu 213164 (CN)
(72) Inventor: HAO, Jiangang, Changzhou, Jiangsu 213164 (CN); ZHOU, Xinhong, Changzhou, Jiangsu 213164 (CN); LIU, Dexin, Changzhou, Jiangsu 213164 (CN); DOU, Xi, Changzhou, Jiangsu 213164 (CN)
(74) Representative: Predazzi, Valentina
(86) International application number: PCT/CN2024/138187
(87) International publication number: WO 2025/139771

(57) **Abstract**

The present disclosure belongs to the technical field of all-solid-state batteries. Provided are a sulfide solid electrolyte membrane and a preparation method therefore, and an all-solid-state alkali metal ion battery. The sulfide solid electrolyte membrane is composed of sulfide particles containing a polymer coating, and the chemical composition of the sulfide particles containing a polymer coating is [E*ₘ*M*ₙ*S*ₒ*] C*_{α}*O*_{β}*S*_{γ}*H*_{δ}*N*_{ζ}*E*ₐ*.

## Description

### CROSS-REFERENCE TO RELATED APPLICATIONS

This application is based upon and claims priority to Chinese Patent Application No. 202311799872.4, filed December 26, 2023, the entire contents of which are incorporated herein by reference.

### FIELD

The present disclosure belongs to the technical field of all-solid-state batteries, and more particularly to a sulfide-based solid electrolyte membrane and a preparation method thereof, and an all-solid-state alkali metal ion battery.

### BACKGROUND

Commercially available alkali metal ion batteries at present are mostly liquid lithium-ion batteries using liquid organic electrolytes. However, liquid organic electrolytes are flammable and volatile. Under improper usage conditions such as overcharging and impact, liquid batteries are prone to severe combustion and other safety hazards. In contrast, all-solid-state alkali metal ion batteries using solid electrolyte membranes have higher safety and can achieve a higher energy density with the cooperation of the solid electrolyte membrane and alkali metal electrodes. Therefore, as next-generation energy storage devices, the development of all-solid-state alkali metal ion batteries has attracted tremendous attention from academia and industry.

There are various types of solid electrolyte membranes for all-solid-state alkali metal ion batteries. Among them, sulfide-based solid electrolyte membranes have high ionic conductivity and good processability. They can be in tight contact with active materials through cold pressing to achieve low interface resistance, and are considered the most promising solid electrolyte membranes. However, existing sulfide-based solid electrolyte membranes (including sulfide-based solid electrolytes such as Li₃PS₄, Li₆PS₅Cl, Li₁₀GeP₂S₁₂, etc.) exhibit extremely poor compatibility with commercial high-voltage positive electrode materials (such as lithium cobalt oxide, ternary high-nickel positive electrode material, lithium nickel manganese oxide, etc.), which is attributed to the tendency of the sulfide-based solid electrolyte membrane to lose Li⁺ at high voltage, triggering oxidation of S²⁻to elemental S and a series of high-interfacial-resistance products; these products seriously restrict the ion transport across the positive electrode/electrolyte interface. So far, it remains a challenge to prepare sulfide-based solid electrolyte membranes (with a binder content of <10 wt%) with low cost, excellent mechanical properties, high-voltage tolerance and high ionic conductivity. This is closely related to the intrinsic thermodynamic instability of sulfide-based solid electrolyte particles and the lack of a binder system that has good compatibility with sulfide-based solid electrolytes.

A lot of research has been conducted in the related art to address the above problems. For example, a patent application with an application No. 202211153228.5 discloses a lithium-ion conductive binder and its preparation method, a sulfide-based electrolyte membrane and its preparation method, and a lithium battery. The binder for the sulfide-based solid electrolyte membrane is a styrenebutadiene-styrene block copolymer grafted with lithium carboxylate, which has strong adhesion and can improve the ionic conductivity of the sulfide-based solid electrolyte membrane. A patent application with an application No. 202211374919.8 discloses a composite solid electrolyte membrane, its preparation method and a solid lithium battery. The solid electrolyte membrane includes a core-shell structured PVDF-HFP@PI nanofiber membrane, with its pores filled with an electrolyte composed of a lithium-ion conductor, a polymer and a lithium salt. The solid electrolyte membrane has excellent mechanical properties and thermal dimensional stability. A patent application with an application No. 202111591792.0 discloses a method for preparing an all-solid-state battery with a lithium-supplemented sulfide-based solid electrolyte membrane, where nitrile butadiene rubber is selected as the binder for the sulfide-based solid electrolyte membrane, and inert lithium powders are scattered onto the surface of the sulfide-based electrolyte layer by using an electrostatic powder spraying device, which achieves lithium supplementation for a negative electrode, improves interfacial contact between the solid electrolyte membrane and a negative electrode sheet, reduces interfacial impedance of the battery, and improves rate performance and capacity retention of the battery.

As another example, a patent application with an application No. 202211739119.1 discloses a sulfide-polymer composite solid electrolyte membrane prepared by means of molecular hybridization, and its preparation method and application. The patent obtains a molecularly hybridized sulfide-polymer composite solid electrolyte membrane through the thiol-olefin reaction of polyethylene glycol diacrylate and sulfide electrolyte. This method utilizing intra-molecular hybridization significantly improves interface compatibility between organic and inorganic electrolytes, and greatly reduces the internal impedance. A patent application with an application No. 202211439068.0 discloses a method for preparing a sulfide composite solid electrolyte membrane with a high-concentration lithium salts and its application. A binder for the solid electrolyte membrane includes a copolymer of one or more of butyl acrylate, ethyl acrylate, polyethylene glycol diacrylate, or polymethyl methacrylate. The membrane has low porosity, high ionic conductivity, high transference number, good contact with lithium metal, etc., and its preparation process is simple and does not require a large amount of organic solvents, making it suitable for large-scale production. A patent application with an application No. 202011597001.0 discloses an electrolyte membrane for a sulfide-based solid battery, and its preparation method and use. The sulfide-based solid electrolyte membrane uses any one or a combination of at least two of a polyethylene separator, a polypropylene separator, a polyethylene-polypropylene composite separator, a polyethylene terephthalate non-woven separator or a polyimide electrospun separator as a base membrane, and nano-ceramic layers are coated on both sides of the base membrane, endowing the electrolyte membrane with high interfacial contact, high strength, and high ionic conductivity.

However, although the sulfide-based solid electrolyte membranes disclosed in the above related art have high ionic conductivity or good mechanical properties, they still have a compatibility issue with a high-voltage positive electrode. Therefore, there still needs to develop a sulfide-based solid electrolyte membrane for a high-voltage positive electrode system.

### SUMMARY

The present disclosure is proposed based on the inventors' discovery and understanding of the following facts and problems: the insufficient compatibility between a sulfide-based electrolyte and a high-voltage positive electrode is related to thermodynamic instability of surface defects (containing a large number of mercapto functional groups) of sulfide particles. The inventors have found through research that it is expected to solve the compatibility issue between the sulfide-based solid electrolyte membrane and the high-voltage positive electrode by first synthesizing high-voltage resistant sulfide particles and then functionalizing the surface of the sulfide particles to further improve their thermodynamic stability.

The present disclosure aims to solve at least one of the technical problems in the related art to a certain extent. To this end, embodiments of the present disclosure provide a sulfide-based solid electrolyte membrane and its preparation method and an all-solid-state alkali metal ion battery.

Embodiment of the present disclosure provide a sulfide-based solid electrolyte membrane, which is composed of sulfide particles having a polymer coating, the sulfide particles having the polymer coating have a chemical composition of [E*ₘ*M*ₙ*S*ₒ*] C*_{α}*O*_{β}*S*_{γ}*H*_{δ}*N*_{ζ}*E*ₐ*, where [EₘMₙSₒ] represents the sulfide particle, E is selected from Li⁺ or Na⁺, M is selected from Si⁴⁺, Ge⁴⁺, Se⁴⁺ or Sn⁴⁺, 3≤*m*≤8, 1≤*n*≤2, 2≤*o*≤8; C*_{α}*O*_{β}*S*_{γ}*H*_{δ}*N*_{ζ}*E*ₐ* represents the polymer coating that forms a disulfide bond with the sulfide particle at a surface of the sulfide particle, *α* is selected from 0.0001 to 1, *β* is selected from 0 to 0.5, *γ* is selected from 0.000001 to 1, *δ* is selected from 0.00001 to 2, *ζ* is selected from 0 to 0.01, and *a* is selected from 0 to 0.0001.

The sulfide-based solid electrolyte membrane according to embodiments of the present disclosure has the following advantages and technical effects.
(1) The sulfide particle [E*ₘ*M*ₙ*S*ₒ*] has a high-voltage resistant characteristic, which helps to improve the high-voltage resistant performance of the sulfide-based solid electrolyte membrane according to embodiments of the present disclosure.
(2) In the sulfide particles having the polymer coating, since the polymer coating is connected to the surface of the sulfide particles through disulfide bonds (S-S bonds), a cross-linked network structure is formed internally throughout the entire sulfide-based solid electrolyte membrane, and the polymer coating serves as an "artificial protective layer" with high oxidation stability on the surface of the sulfide particles, which improves the thermodynamic stability relative to the high-voltage positive electrode, thereby improving the compatibility of the sulfide-based solid electrolyte membrane according to embodiments of the present disclosure with the high-voltage positive electrode.
(3) Due to the presence of the S-S bonds on the surface of the sulfide particles, the electron cloud density on S atom increases significantly, enhancing the interaction force between S atom and alkali metal ion. The strong interaction force between the S atom and the alkali metal ion kinetically restricts the escape of the alkali metal ion from the electrolyte and suppresses the oxidation of S²⁻ under high-voltage condition, thereby improving the high-voltage stability of the sulfide-based solid electrolyte membrane according to embodiments of the present disclosure, endowing the electrolyte membrane with a wider electrochemical window and improving the high-voltage cycling performance of the all-solid-state alkali metal ion battery.
(4) The abundant S-S bonds have a reversible break-regeneration function at room temperature, which provides the sulfide-based solid electrolyte membrane according to embodiments of the present disclosure with an excellent self-healing ability, ensuring the mechanical stability of the sulfide-based solid electrolyte membrane and its close contact with the electrode during a cycling process of the battery, thereby improving the cycling stability and rate capability of the battery.
(5) The design of the sulfide-based solid electrolyte according to embodiments of the present disclosure endows the sulfide-based solid electrolyte membrane with excellent ionic conductivity, which ensures optimal ion transport performance at an electrode interface and improves the cycling stability and rate performance of the all-solid-state alkali metal ion battery.
(6) The sulfide-based solid electrolyte membrane according to embodiments of the present disclosure does not undergo significant chemical/electrochemical side reactions with the high-voltage positive electrode active material, and effectively buffers the volume change of the positive electrode active material during the charging/discharging process, ensuring good interfacial contact throughout the entire charging/discharging cycle of the all-solid-state alkali metal ion battery, which reduces the interfacial impedance of the battery and improves the cycling stability and rate performance of the battery.

In some embodiments, based on a total mass of the sulfide-based solid electrolyte membrane of 100%, a mass fraction of the sulfide particles is in a range of 80 to 99%, and a mass fraction of the polymer coating is in a range of 1 to 20%.

In some embodiments, the sulfide-based solid electrolyte membrane has a thickness of 15 to 35 µm.

In addition, embodiments of the present disclosure also provide a method for preparing the sulfide-based solid electrolyte membrane, which includes:
S1, mixing sulfide particles with a binder, and subjecting a mixture of the sulfide particles and the binder to a ball-milling treatment in a dry atmosphere to obtain sulfide particles having a polymer coating; where the binder is a polymer having a terminal thiol group and a disulfide bond-containing structure; and
S2, subjecting the sulfide particles having the polymer coating to a hot-pressing treatment to obtain the sulfide-based solid electrolyte membrane.

The preparation method according to embodiments of the present disclosure has the following advantages and technical effects.
(1) Compared with the sulfide-based solid electrolyte membrane in the related art, the sulfide-based solid electrolyte membrane according to embodiments of the present disclosure has excellent ionic conductivity (e.g., 0.5 to 8 mS/cm), excellent mechanical properties (e.g., a tensile strength of 10 to 100 MPa) and a wide electrochemical window (e.g., 5.5 to 6.0 V vs Li/Li⁺ ), does not undergo significant chemical/electrochemical side reactions with the high-voltage positive electrode active material, and significantly improves the performance of high-voltage all-solid-state battery. These advantages are related to the disulfide bonds formed between the binder having the terminal thiol group and the disulfide bond-containing structure and the surface of the sulfide particles, as well as the high self-healing ability of such electrolyte membrane system itself.
(2) In the preparation method according to embodiments of the present disclosure, the ball-milling treatment is required in step S1, through which the terminal thiol group of the binder and the mercapto functional group on the surface of the sulfide particle form the disulfide bond. If a simple mixing method is used, it is impossible to achieve uniform distribution of the sulfide particles, which will affect the performance of the sulfide-based solid electrolyte membrane.
(3) In the preparation method according to embodiments of the present disclosure, the ball-milling treatment in step S1 is carried out in a dry atmosphere to avoid deterioration of the sulfide particles.

In some embodiments, the binder in step S1 has a general structure of formula (1): 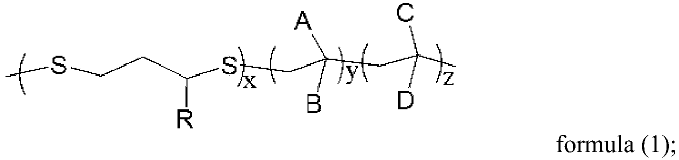
where x is selected from 10 to 1000, and y and z are each independently selected from 0 to 2000;
A and C are each independently selected from H, Cl, CN or methyl;
B and D are each independently selected from an alkoxycarbonyl group having 10 or less carbon atoms, a cyano group, a carbamoyl group, a group having 10 or less carbon atoms and having a terminal carboxylate structure, a group of formula (2), a group of formula (3), or a group of formula (4), where w in formula (2) and w in formula (3) are each independently selected from 0 to 100; 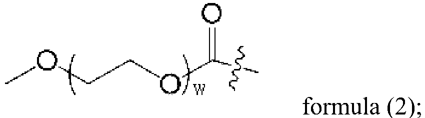 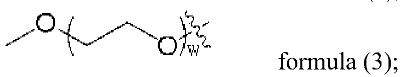 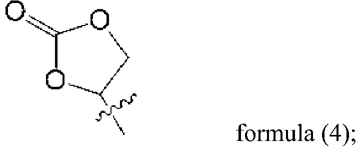
where R is selected from an alkyl group having 10 or less carbon atoms and having a terminal mercapto group, a terminal hydroxyl group, a terminal methylsulfonyl group, a terminal cyano group, a terminal alkoxyphosphoryl group, a terminal carboxylic acid group or a terminal carboxylic acid-derived group.

In some embodiments, in step S1, a mass ratio of the sulfide particles to the binder is (80-99): (1-20).

In some embodiments, in step S1, the ball-milling treatment is performed at a speed of 2000 r/min or more for 1 h or more.

In some embodiments, in step S1, the ball-milling treatment is performed at a speed of 2000 to 10000 r/min for 1 to 24 h.

In some embodiments, in step S2, the hot-pressing treatment is performed at a pressure of 100 MPa or higher.

In addition, embodiments of the present disclosure also provide an all-solid-state alkali metal ion battery, which includes the sulfide-based solid electrolyte membrane according to embodiments of the present disclosure or the sulfide-based solid electrolyte membrane prepared by the method according to embodiments of the present disclosure.

The all-solid-state alkali metal ion battery according to embodiments of the present disclosure has the following advantages and technical effects.

The all-solid-state alkali metal ion battery according to embodiments of the present disclosure has excellent cycling stability and rate performance.

### BRIEF DESCRIPTION OF THE DRAWINGS

FIG. 1 is a schematic diagram showing a reaction between a binder and a sulfide particle at a surface of the sulfide particle to form S-S bonds in a preparation method of the present disclosure;
FIG. 2 shows long-term cycling performances of all-solid-state lithium-ion batteries of Application Example 2 and Comparative Application Example 2 at room temperature;
FIG. 3 shows long-term cycling performances of all-solid-state lithium-ion batteries of Application Example 3 and Comparative Application Example 3 at room temperature;
FIG. 4 shows long-term cycling performances of all-solid-state lithium-ion batteries of Application Example 5 and Comparative Application Example 5 at room temperature; and
FIG. 5 shows long-term cycling performances of all-solid-state lithium-ion batteries of Application Example 6 and Comparative Application Example 6 at room temperature.

### DETAILED DESCRIPTION

Embodiments of the present disclosure are described in detail below, examples of which are shown in the accompanying drawings. The embodiments described below with reference to the accompanying drawings are illustrative and are intended to explain the present disclosure, but should not be understood as limiting the present disclosure.

A sulfide-based solid electrolyte membrane is composed of sulfide particles having a polymer coating, the sulfide particles having the polymer coating have a chemical composition of [E*ₘ*M*ₙ*S*ₒ*] C*_{α}*O*_{β}*S*_{γ}*H*_{δ}*N*_{ζ}*E*ₐ*, where [EₘMₙSₒ] represents the sulfide particle, E is selected from Li⁺ or Na⁺, M is selected from Si⁴⁺, Ge⁴⁺, Se⁴⁺ or Sn⁴⁺, 3≤*m*≤8, 1≤*n*≤2, 2≤*o*≤8; C*_{α}*O*_{β}*S*_{γ}*H*_{δ}*N*_{ζ}*E*ₐ* represents the polymer coating that forms a disulfide bond with the sulfide particle at a surface of the sulfide particle, *α* is selected from 0.0001 to 1, *β* is selected from 0 to 0.5, *γ* is selected from 0.000001 to 1, *δ* is selected from 0.00001 to 2, *ζ* is selected from 0 to 0.01, and *a* is selected from 0 to 0.0001.

The S-S bonds formed between the polymer coating and the surface of the sulfide particles enable the entire sulfide-based solid electrolyte membrane to form a cross-linked network structure internally, and the polymer coating serves as an "artificial protective layer" with high oxidation stability on the surface of the sulfide particles, which improves the thermodynamic stability relative to the high-voltage positive electrode. In addition, due to the presence of the S-S bonds on the surface of the sulfide particles, the electron cloud density on S atom increases significantly, enhancing the interaction force between S atom and Li ion, and the strong interaction force between the S atom and the Li ion kinetically restricts the escape of the Li⁺ from the electrolyte and suppresses the oxidation of S²⁻ under high-voltage condition, thereby improving the high-voltage stability of the sulfide-based solid electrolyte membrane. Meanwhile, the abundant disulfide bonds endow the entire sulfide-based solid electrolyte membrane with an excellent self-healing ability, and enable the sulfide-based solid electrolyte membrane to withstand the stress caused by volume expansion of electrodes, so as to maintain the structural integrity of the sulfide-based solid electrolyte membrane. The sulfide-based solid electrolyte membrane according to embodiments of the present disclosure can effectively buffer the volume change of the positive electrode active material during the charging/discharging process, ensuring good interfacial contact throughout the entire charging/discharging cycle of the battery, and the high ionic conductivity of the electrolyte membrane ensures optimal ion transport performance at the electrode interface and improves the cycling stability and rate performance of the battery.

In some embodiments, based on a total mass of the sulfide-based solid electrolyte membrane of 100%, a mass fraction of the sulfide particles is in a range of 80 to 99%, and a mass fraction of the polymer coating is in a range of 1 to 20%. In a case where the mass fraction of the sulfide particles is too low, while the mass fraction of the polymer coating is too high, it is not conducive to improving the ion transport performance of the sulfide-based solid electrolyte membrane. In a case where the mass fraction of the sulfide particles is too high, while the mass fraction of the polymer coating is too low, it is not conducive to improving the mechanical properties of the sulfide-based solid electrolyte membrane.

In some embodiments, the sulfide-based solid electrolyte membrane has a thickness of 15 to 35 µm. In a case where the thickness of the membrane is too low, it is not conducive to improving the cycling performance of the all-solid-state alkali metal ion battery, and the battery is prone to internal short circuit, leading to a safety accident. In a case where the membrane is too thick, it is not conducive to improving the rate performance of the all-solid-state alkali metal ion battery.

In addition, embodiments of the present disclosure also provide a method for preparing a sulfide-based solid electrolyte membrane, which includes:
S1, mixing sulfide particles with a binder, and subjecting a mixture of the sulfide particles and the binder to a ball-milling treatment in a dry atmosphere to obtain sulfide particles having a polymer coating; where the binder is a polymer having a terminal thiol group and a disulfide bond-containing structure; and
S2, subjecting the sulfide particles having the polymer coating to a hot-pressing treatment to obtain the sulfide-based solid electrolyte membrane.

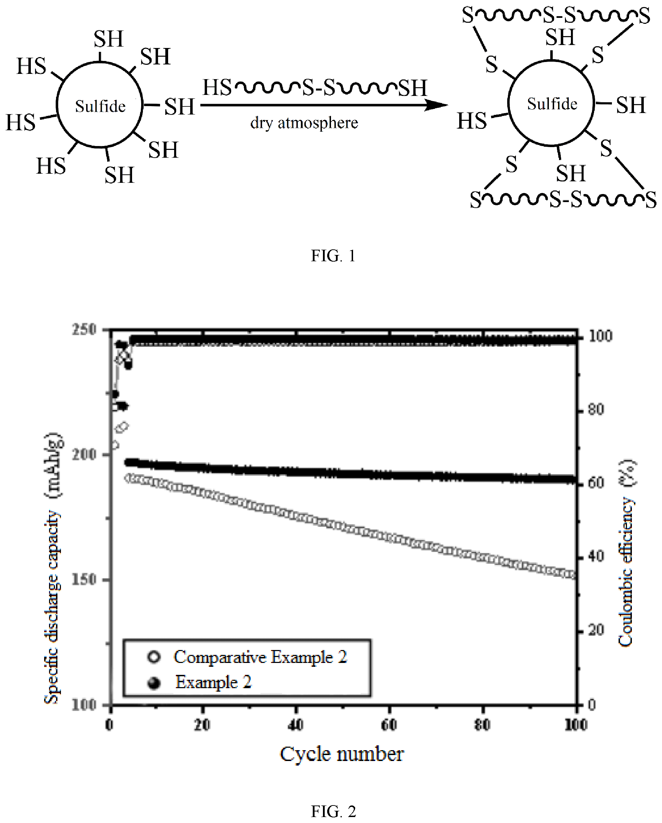

The sulfide particles [EₘMₙSₒ] are high-voltage resistant sulfide-based electrolytes. As shown in FIG. 1, in the ball-milling treatment of step S1, the binder having the terminal thiol group and the disulfide bond-containing structure can construct a protective layer on the surface of the sulfide particles by forming S-S bonds, thereby improving the thermodynamic stability of the high-voltage positive electrode, and further synergistically improving the compatibility of the sulfide-based solid electrolyte membrane with the high-voltage positive electrode. Compared with the sulfide-based solid electrolyte membrane in the related art, due to the S-S bonds on the surface of the sulfide particles, the electron cloud density on S atom increases significantly, enhancing the interaction force between S atom and alkali metal ion, and the strong interaction force between the S atom and the alkali metal ion kinetically restricts the escape of the alkali metal ion from the electrolyte and suppresses the oxidation of S²⁻ under high-voltage condition, thereby improving the high-voltage stability of the sulfide-based solid electrolyte membrane. Moreover, the abundant S-S bonds in the binder and the newly formed S-S bonds between the binder and the sulfide particles have reversible break-regeneration function at room temperature, which provides the sulfide-based solid electrolyte membrane with self-healing ability, ensuring the mechanical stability of the electrolyte membrane and its close contact with the electrode during the cycling process of the battery.

It should be noted that in the preparation method according to embodiments of the present disclosure, the ball-milling treatment in step S1 is carried out in a dry atmosphere to avoid deterioration of the sulfide particles. As for the specific gas used in the dry atmosphere, there is no particular limitation, as long as it does not react with the sulfide particles, the binder and the sulfide-based solid electrolyte membrane and ensures safety. For example, it may be an inert gas such as argon or nitrogen, or it may be a mixture of oxygen or air and an inert gas. In a case where the dry atmosphere contains oxygen or air, the proportion of oxygen or air cannot be too high to avoid explosion.

In some embodiments, the binder in step S1 has a general structure of formula (1): 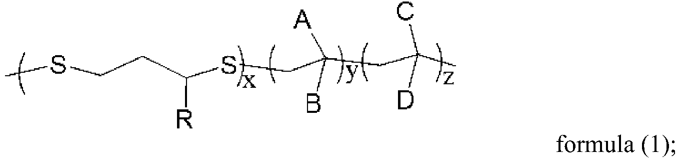
where x is selected from 10 to 1000, and y and z are each independently selected from 0 to 2000;
A and C are each independently selected from H, Cl, CN or methyl;
B and D are each independently selected from an alkoxycarbonyl group having 10 or less carbon atoms, a cyano group, a carbamoyl group, a group having 10 or less carbon atoms and having a terminal carboxylate structure, a group of formula (2), a group of formula (3), or a group of formula (4), wherein w in formula (2) and w in formula (3) are each independently selected from 0 to 100; 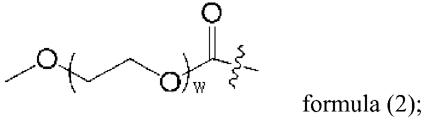 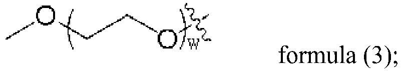 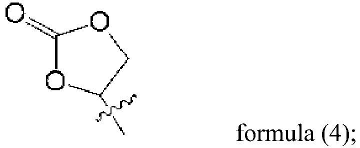
where R is selected from an alkyl group having 10 or less carbon atoms and having a terminal mercapto group, a terminal hydroxyl group, a terminal methylsulfonyl group, a terminal cyano group, a terminal alkoxyphosphoryl group, a terminal carboxylic acid group or a terminal carboxylic acid-derived group.

The binder having the general structure of formula (1) can improve the compatibility of the sulfide-based solid electrolyte membrane with the high-voltage positive electrode and the self-healing ability of the sulfide-based solid electrolyte membrane more effectively.

In some embodiments, in step S1, a mass ratio of the sulfide particles to the binder is (80-99): (1-20). In a case where the mass ratio of the sulfide particles to the binder is too high, it is not conducive to improving the mechanical properties of the sulfide-based solid electrolyte membrane. In a case where the mass ratio of the sulfide particles to the binder is too low, it is not conducive to improving the ion transport performance of the sulfide-based solid electrolyte membrane.

In some embodiments, in step S1, the ball-milling treatment is performed at a speed of 2000 r/min or more for 1 h or more. In a case where these ball-milling speed and ball-milling time are met, it is more conducive to the uniform mixing of the sulfide particles and the binder, and thus is conducive to improving the performance of sulfide-based solid electrolyte membrane. Optionally, the speed of the ball-milling treatment is in a range of 2000 to 10000 r/min, such as 2000 r/min, 3000 r/min, 4000 r/min, 5000 r/min, 6000 r/min, 7000 r/min, 8000 r/min, 9000 r/min, 10000 r/min, etc., and the time for the ball-milling treatment is in a range of 1 to 24 h, such as 1 h, 5 h, 10 h, 15 h, 20 h, 24 h, etc. In a case where the speed of the ball-milling treatment is too high, or the time for the ball-milling treatment is too long, the improvement of the above effects is not significant, instead, it is not conducive to the cost reduction and efficiency enhancement.

In some embodiments, in step S2, the hot-pressing treatment is performed at a pressure of 100 MPa or higher. Meeting such pressure condition is conducive to improving the ion transport performance and mechanical properties of the sulfide-based solid electrolyte membrane. Optionally, the pressure for the hot-pressing treatment is in a range of 100 to 1000 MPa, such as 100 MPa, 200 MPa, 300 MPa, 400 MPa, 500 MPa, 600 MPa, 700 MPa, 800 MPa, 900 MPa, 1000 MPa, etc. In a case where the pressure for the hot-pressing treatment is too large, the improvement of the above effects is not significant, instead, it is not conducive to the cost reduction and efficiency enhancement.

In addition, embodiments of the present disclosure also provide an all-solid-state alkali metal ion battery, which includes the sulfide-based solid electrolyte membrane according to embodiments of the present disclosure or the sulfide-based solid electrolyte membrane obtained by the preparation method according to embodiments of the present disclosure.

The all-solid-state alkali metal ion battery according to embodiments of the present disclosure may be an all-solid-state lithium-ion battery, an all-solid-state sodium-ion battery or an all-solid-state potassium-ion battery, all of which have excellent cycling stability and rate performance.

The all-solid-state alkali metal ion battery according to embodiments of the present disclosure has no particular limitation on the positive electrode, which may be any positive electrode in the related art, such as a high-voltage positive electrode or a high specific capacity positive electrode containing a sulfur-selenium compound. For example, the active material for the high-voltage positive electrode may include at least one of lithium cobalt oxide, lithium nickel cobalt manganese oxide, lithium nickel cobalt aluminum oxide, lithium manganese oxide, lithium nickel manganese oxide, lithium cobalt manganese oxide, lithium-rich manganese-based material, nickel manganese spinel or NaₓPR(CN)₆ (P and R are each independently selected from Fe, Co, Ni or Mn, and x is 1 to 2), sodium vanadium phosphate, sulfur, sodium iron sulfate, sodium fluorophosphate, sodium vanadium fluorophosphate, sodium iron fluorophosphate, sodium manganese oxide or sodium cobalt oxide. The active material for the high specific capacity positive electrode containing sulfur-selenium compound may include at least one of elemental sulfur, elemental selenium, titanium disulfide, molybdenum disulfide, LiTi₂(PS₄)₃, LiTi₂(P(SₓSe_{y})₄)₃ (x+y=1), NaTi₂(PS₄)₃, NaTi₂(P(SₓSe_{y})₄)₃ (x+y=1), etc.

The present disclosure is described in detail below with reference to examples and drawings.

### Example 1

An integrated sulfide-based solid electrolyte membrane based on disulfide bonds is composed of sulfide particles having a polymer coating. The sulfide particles having the polymer coating have a chemical composition of [Li*₈*GeS*₆*]*₃*C*_{0.000221}*O*_{0.000086}*S_{0.000157}H*_{0.000031}*, where [Li*₈*GeS*₆*] is the sulfide particle, and *C_{0.000221}*O*_{0.000086}*S_{0.000157}H*_{0.000031}* is the polymer coating that forms a disulfide covalent bond with the sulfide particle at a surface of the sulfide particle.

The sulfide-based solid electrolyte membrane was prepared by a method including the following specific operations.

S1. Under dry argon, sulfide particles [Li*₈*GeS*₆*] and a binder A1 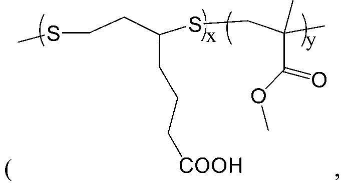 where x=1000, y=100) including a terminal thiol group and a disulfide bond-containing structure were mixed and ball-milled in a mass ratio of 99%:1% at a ball-milling speed of 2000 r/min for 1 h to obtain sulfide-based solid electrolyte powders.

The sulfide-based solid electrolyte powders are sulfide particles having a polymer coating. The sulfide particles having the polymer coating have a chemical composition of [Li*₈*GeS*₆*]*₃*C*_{0.000221}*O*_{0.000086}*S*_{0.000157}*H*_{0.000031},* which is composed of sulfide particles [Li*₈*GeS*₆*] and the polymer coating of C*_{0.000221}*O*_{0.000086}*S*_{0.000157}*H*_{0.000031}* coated on the surface of the sulfide particles.

S2. The sulfide-based solid electrolyte powders obtained in step S1 are hot-pressed at a pressure of 100 MPa to obtain a sulfide-based solid electrolyte membrane with a thickness of 15 µm.

### Application Example 1

A lithium nickel manganese oxide/Li all-solid-state battery was assembled with the sulfide-based solid electrolyte membrane of Example 1 as an all-solid-state lithium-ion battery.

### Example 2

An integrated sulfide-based solid electrolyte membrane based on disulfide bonds is composed of sulfide particles having a polymer coating. The sulfide particles having the polymer coating have a chemical composition of [Li*₄*SiS*₄*]*₃₈*C*_{0.0122}* S*_{0.0003}*H*_{0.0010}*N*_{0.0047}*, where [Li*₄*SiS*₄*] is the sulfide particle, and C*_{0.0122}* S*_{0.0003}*H*_{0.0010}*N*_{0.0047}* is the polymer coating that forms a disulfide covalent bond with the sulfide particle at a surface of the sulfide particle.

The sulfide-based solid electrolyte membrane was prepared by a method including the following specific operations.

S1. Under dry argon, sulfide particles [Li*₄*SiS*₄*] and a binder A2 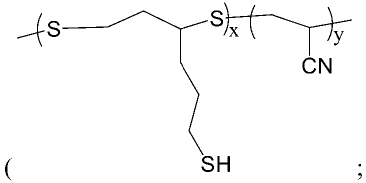 where x=10, y=1000) including a terminal thiol group and a disulfide bond-containing structure were mixed and ball-milled in a mass ratio of 87.5%:12.5% at a ball-milling speed of 2000 r/min for 20 h to obtain sulfide-based solid electrolyte powders.

The sulfide-based solid electrolyte powders are sulfide particles having a polymer coating. The sulfide particles having the polymer coating have a chemical composition of [Li*₄*SiS*₄*]*₃₈*C*_{0.0122}* S*_{0.0003}*H*_{0.0010}*N*_{0.0047}*, which is composed of sulfide particles [Li*₄*SiS*₄*] and the polymer coating of C*_{0.0122}* S*_{0.0003}*H*_{0.0010}*N*_{0.0047}* coated on the surface of the sulfide particles.

S2. The sulfide-based solid electrolyte powders obtained in step S1 are hot-pressed at a pressure of 400 MPa to obtain a sulfide-based solid electrolyte membrane with a thickness of 20 µm.

### Application Example 2

A LiNi_{0.8}Co_{0.1}Mn_{0.1}O₂/Li all-solid-state battery was assembled with the sulfide-based solid electrolyte membrane of Example 2 as an all-solid-state lithium-ion battery.

### Example 3

An integrated sulfide-based solid electrolyte membrane based on disulfide bonds is composed of sulfide particles having a polymer coating. The sulfide particles having the polymer coating have a chemical composition of [Li*₈*SeS*₆*]*_{24.5}*C_{0.0075}O_{0.0027}S_{0.0027}H_{0.0006}N_{0.0010}, where [Li*₈*SeS*₆*] is the sulfide particle, and C_{0.0075}O_{0.0027}S_{0.0027}H_{0.0006}N_{0.0010} is the polymer coating that forms a disulfide covalent bond with the sulfide particle at a surface of the sulfide particle.

The sulfide-based solid electrolyte membrane was prepared by a method including the following specific operations.

S1. Under a dry argon atmosphere, sulfide particles [Li*₈*SeS*₆*] and a binder A3 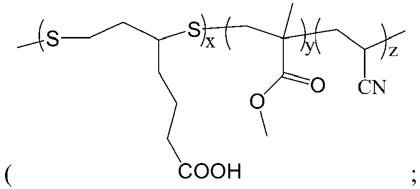 where x=100; y=100; z=100) including a terminal thiol group and a disulfide bond-containing structure were mixed and ball-milled in a mass ratio of 94.1%:5.9% at a ball-milling speed of 2000 r/min for 1 h to obtain sulfide-based solid electrolyte powders.

The sulfide-based solid electrolyte powders are sulfide particles having a polymer coating. The sulfide particles having the polymer coating have a chemical composition of [Li*₈*SeS*₆*]*_{24.5}*C_{0.0075}O_{0.0027}S_{0.0027}H_{0.0006}N_{0.0010}, which is composed of sulfide particles [Li*₈*SeS*₆*] and the polymer coating of C_{0.0075}O_{0.0027}S_{0.0027}H_{0.0006}N_{0.0010} coated on the surface of the sulfide particles.

S2. The sulfide-based solid electrolyte powders obtained in step S1 are hot-pressed at a pressure of 1000 MPa to obtain a sulfide-based solid electrolyte membrane with a thickness of 22 µm.

### Application Example 3

A LiCoO₂/Li all-solid-state battery was assembled with the sulfide-based solid electrolyte membrane of Example 3 as an all-solid-state lithium-ion battery.

### Example 4

An integrated sulfide-based solid electrolyte membrane based on disulfide bonds is composed of sulfide particles having a polymer coating. The sulfide particles having the polymer coating have a chemical composition of [Li*₇*SnS*_{5.5}*]*_{25.6}*C*_{0.0017}*O*_{0.0009}*S*_{0.00063}H_{0.00029},* where [Li*₇*SnS_{*5*.*5*}] is the sulfide particle, and C*_{0.0017}*O*_{0.0009}*S*_{0.00063}H_{0.00029}* is the polymer coating that forms a disulfide covalent bond with the sulfide particle at a surface of the sulfide particle.

The sulfide-based solid electrolyte membrane was prepared by a method including the following specific operations.

S1. Under dry argon, sulfide particles [Li*₇*SnS_{*5*.*5*}] and a polymer binder A4 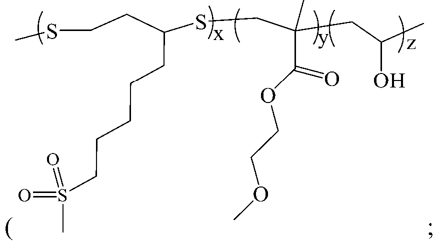 where x=200, y=100, z=1000) including a terminal thiol group and a disulfide bond-containing structure were mixed and ball-milled in a mass ratio of 95.5%:4.5% at a ball-milling speed of 2000 r/min for 18 h to obtain sulfide-based solid electrolyte powders.

The sulfide-based solid electrolyte powders are sulfide particles having a polymer coating. The sulfide particles having the polymer coating have a chemical composition of [Li*₇*SnS*_{5.5}*]*_{25.6}*C*_{0.0017}*O*_{0.0009}*S*_{0.00063}H_{0.00029}*, which is composed of sulfide particles [Li*₇*SnS*_{5.5}*] and the polymer coating of C*_{0.0017}*O*_{0.0009}*S*_{0.00063}H_{0.00029}* coated on the surface of the sulfide particles.

S2. The sulfide-based solid electrolyte powders obtained in step S1 are hot-pressed at a pressure of 600 MPa to obtain a sulfide-based solid electrolyte membrane with a thickness of 28 µm.

### Application Example 4

A LiCoO₂/nano-Si all-solid-state battery was assembled with the sulfide-based solid electrolyte membrane of Example 4 as an all-solid-state lithium-ion battery.

### Example 5

An integrated sulfide-based solid electrolyte membrane based on disulfide bonds is composed of sulfide particles having a polymer coating. The sulfide particles having the polymer coating have a chemical composition of [Li*_{3.4}*Si*_{1.1}*S*_{5.5}*]*₇₁*C*_{0.016}*O*_{0.0104}*S*_{0.00011}*H*_{0.002}*N*_{2.5*10}⁻⁶*, where [Li*_{3.4}*Si*_{1.1}*S*_{5.5}*] is the sulfide particle, and C*_{0.016}*O*_{0.0104}*S*_{0.00011}*H*_{0.002}*N*_{2.5*10}⁻⁶* is the polymer coating that forms a disulfide covalent bond with the sulfide particle at a surface of the sulfide particle.

The sulfide-based solid electrolyte membrane was prepared by a method including the following specific operations.

S1. Under dry argon, sulfide particles [Li*_{3.4}*Si*_{1.1}*S*_{5.5}*] and a polymer binder A5 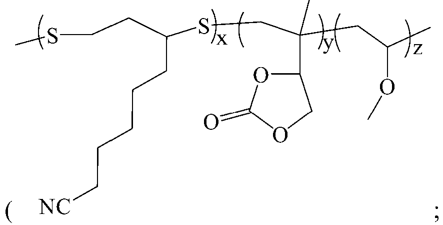 where x=10, y=1000, z=500) including a terminal thiol group and a disulfide bond-containing structure were mixed and ball-milled in a mass ratio of 80%:20% at a ball-milling speed of 2000 r/min for 15 h to obtain sulfide-based solid electrolyte powders.

The sulfide-based solid electrolyte powders are sulfide particles having a polymer coating. The sulfide particles having the polymer coating have a chemical composition of [Li*_{3.4}*Si*_{1.1}*S*_{5.5}*]*₇₁*C*_{0.016}*O*_{0.0104}*S*_{0.00011}*H*_{0.002}*N*_{2.5*10}⁻⁶*, which is composed of sulfide particles [Li*_{3.4}*Si*_{1.1}*S*_{5.5}*] and the polymer coating of C*_{0.016}*O*_{0.0104}*S*_{0.00011}*H*_{0.002}*N*_{2.5*10}⁻⁶* coated on the surface of the sulfide particles.

S2. The sulfide-based solid electrolyte powders obtained in step S1 are hot-pressed at a pressure of 500 MPa to obtain a sulfide-based solid electrolyte membrane with a thickness of 31 µm.

### Application Example 5

A LiNi_{0.8}Co_{0.1}Mn_{0.1}O₂/nano-Si all-solid-state battery was assembled with the sulfide-based solid electrolyte membrane of Example 5 as an all-solid-state lithium-ion battery.

### Example 6

An integrated sulfide-based solid electrolyte membrane based on disulfide bonds is composed of sulfide particles having a polymer coating. The sulfide particles having the polymer coating have a chemical composition of [Li*_{7.6}*SnS*_{5.8}*]*₂₆*C*_{0.00064}*O*_{0.00019}*S*_{0.00038}*H*_{0.000089}*N*_{8.3*10}⁻⁷*Li*_{0.000039}*, where [Li*_{7.6}*SnS*_{5.8}*] is the sulfide particle, and C*_{0.00064}*O*_{0.00019}*S*_{0.00038}*H*_{0.000089}*N*_{8.3*10}⁻⁷*Li*_{0.000039}* is the polymer coating that forms a disulfide covalent bond with the sulfide particle at a surface of the sulfide particle.

The sulfide-based solid electrolyte membrane was prepared by a method including the following specific operations.

S1. Under dry argon, sulfide particles [Li*_{7.6}*SnS*_{5.8}*] and a polymer binder A6 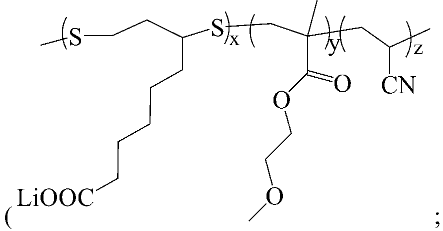 where x=1000; y=10; z=10) including a terminal thiol group and a disulfide bond-containing structure were mixed and ball-milled in a mass ratio of 96.8%:3.2% at a ball-milling speed of 2000 r/min for 10 h to obtain sulfide-based solid electrolyte powders.

The sulfide-based solid electrolyte powders are sulfide particles having a polymer coating. The sulfide particles having the polymer coating have a chemical composition of [Li*_{7.6}*SnS*_{5.8}*]*₂₆*C*_{0.00064}*O*_{0.00019}*S*_{0.00038}*H*_{0.000089}*N*_{8.3*10}⁻⁷*Li*_{0.000039}*, which is composed of sulfide particles [Li*_{7.6}*SnS*_{5.8}*] and the polymer coating of C*_{0.00064}*O*_{0.00019}*S*_{0.00038}*H*_{0.000089}*N*_{8.3*10}⁻⁷*Li*_{0.000039}* coated on the surface of the sulfide particles.

S2. The sulfide-based solid electrolyte powders obtained in step S1 are hot-pressed at a pressure of 300 MPa to obtain a sulfide-based solid electrolyte membrane with a thickness of 18 µm.

### Application Example 6

A LiCoO₂/µm-Si all-solid-state battery was assembled with the sulfide-based solid electrolyte membrane of Example 6 as an all-solid-state lithium-ion battery.

### Example 7

An integrated sulfide-based solid electrolyte membrane based on disulfide bonds is composed of sulfide particles having a polymer coating. The sulfide particles having the polymer coating have a chemical composition of [Na*_{7.6}*SnS*_{5.8}*]*₂₆*C*_{0.00064}*O*_{0.00019}*S*_{0.00038}*H*_{0.000089}*N*_{8.3*10}⁻⁷*Na*_{0.000039}*, where [Na*_{7.6}*SnS*_{5.8}*] is the sulfide particle, and C*_{0.00064}*O*_{0.00019}*S*_{0.00038}*H*_{0.000089}*N*_{8.3*10}⁻⁷*Na*_{0.000039}* is the polymer coating that forms a disulfide covalent bond with the sulfide particle at a surface of the sulfide particle.

The sulfide-based solid electrolyte membrane was prepared by a method including the following specific operations.

S1. Under dry argon, sulfide particles [Na*_{7.6}*SnS*_{5.8}*] and a polymer binder A7 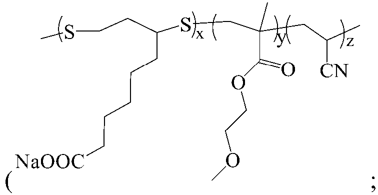 where x=1000; y=10; z=10) including a terminal thiol group and a disulfide bond-containing structure were mixed and ball-milled in a mass ratio of 96.8%:3.2% at a ball-milling speed of 2000 r/min for 24 h to obtain sulfide-based solid electrolyte powders.

The sulfide-based solid electrolyte powders are sulfide particles having a polymer coating. The sulfide particles having the polymer coating have a chemical composition of [Na*_{7.6}*SnS*_{5.8}*]*₂₆*C*_{0.00064}*O*_{0.00019}*S*_{0.00038}*H*_{0.000089}*N*_{8.3*10}⁻⁷*Na*_{0.000039}*, which is composed of sulfide particles [Na*_{7.6}*SnS*_{5.8}*] and the polymer coating of C*_{0.00064}*O*_{0.00019}*S*_{0.00038}*H*_{0.000089}*N*_{8.3*10}⁻⁷*Na*_{0.000039}* coated on the surface of the sulfide particles.

S2. The sulfide-based solid electrolyte powders obtained in step S1 are hot-pressed at a pressure of 300 MPa to obtain a sulfide-based solid electrolyte membrane with a thickness of 18 µm.

### Application Example 7

A NaCoO₂/µm-Si all-solid-state battery was assembled with the sulfide-based solid electrolyte membrane of Example 7 as an all-solid-state sodium-ion battery.

### Comparative Example 1

The preparation method of the sulfide-based solid electrolyte membrane of this comparative example was the same as that of Example 1, except for that polytetrafluoroethylene (PTFE) was used as the binder.

### Comparative Application Example 1

The all-solid-state lithium-ion battery and its preparation method of this Comparative Application Example were the same as that of Example 1, except for that the sulfide-based solid electrolyte membrane of Comparative Example 1 was used.

### Comparative Example 2

The preparation method of the sulfide-based solid electrolyte membrane of this comparative example was the same as that of Example 2, except for that polytetrafluoroethylene (PTFE) was used as the binder.

### Comparative Application Example 2

The all-solid-state lithium-ion battery and its preparation method of this Comparative Application Example were the same as that of Example 2, except for that the sulfide-based solid electrolyte membrane of Comparative Example 2 was used.

### Comparative Example 3

The preparation method of the sulfide-based solid electrolyte membrane of this comparative example was the same as that of Example 3, except for that polytetrafluoroethylene (PTFE) was used as the binder.

### Comparative Application Example 3

The all-solid-state lithium-ion battery and its preparation method of this Comparative Application Example were the same as that of Example 3, except for that the sulfide-based solid electrolyte membrane of Comparative Example 3 was used.

### Comparative Example 4

The preparation method of the sulfide-based solid electrolyte membrane of this comparative example was the same as that of Example 4, except for that polytetrafluoroethylene (PTFE) was used as the binder.

### Comparative Application Example 4

The all-solid-state lithium-ion battery and its preparation method of this Comparative Application Example were the same as that of Example 4, except for that the sulfide-based solid electrolyte membrane of Comparative Example 4 was used.

### Comparative Example 5

The preparation method of the sulfide-based solid electrolyte membrane of this comparative example was the same as that of Example 5, except for that polytetrafluoroethylene (PTFE) was used as the binder.

### Comparative Application Example 5

The all-solid-state lithium-ion battery and its preparation method of this Comparative Application Example were the same as that of Example 5, except for that the sulfide-based solid electrolyte membrane of Comparative Example 5 was used.

### Comparative Example 6

The preparation method of the sulfide-based solid electrolyte membrane of this comparative example was the same as that of Example 6, except for that polytetrafluoroethylene (PTFE) was used as the binder.

### Comparative Application Example 6

The all-solid-state lithium-ion battery and its preparation method of this Comparative Application Example were the same as that of Example 6, except for that the sulfide-based solid electrolyte membrane of Comparative Example 6 was used.

### Comparative Example 7

The preparation method of the sulfide-based solid electrolyte membrane of this comparative example was the same as that of Example 7, except for that polytetrafluoroethylene (PTFE) was used as the binder.

### Comparative Application Example 7

The all-solid-state sodium-ion battery and its preparation method of this Comparative Application Example were the same as that of Example 7, except for that the sulfide-based solid electrolyte membrane of Comparative Example 7 was used.

Performance Test I: physicochemical properties of the sulfide-based solid electrolyte membranes of Examples 1 to 7 and Comparative Examples 1 to 7 were tested. The results are shown in Table 1.
(1) Thickness: the sulfide-based solid electrolyte membrane of each of Examples 1 to 7 and Comparative Examples 1 to 7 was clamped on a thickness gauge. After the readings stabilized, the thickness of the membrane was accurately measured. For each group of samples, the thickness was measured at 5 different areas, and an average value was calculated.
(2) Room-temperature ionic conductivity: an electrochemical impedance spectrum (EIS) of the sulfide-based solid electrolyte membrane of each of Examples 1 to 7 and Comparative Examples 1 to 7 was measured using a multi-channel electrochemical workstation (VMP-300). The sulfide-based solid electrolyte membrane was assembled to a steel-steel symmetrical cell, and an AC impedance spectrum was tested over a frequency range of 100 mHz to 7 MHz with a perturbation of 10 mV, a corresponding impedance value was read, and the room-temperature ionic conductivity was calculated according to a formula of *σ=L*/*RS*, where *L* represents the thickness of the sulfide-based solid electrolyte membrane, in cm; *R* represents the impedance of the sulfide-based solid electrolyte membrane, in Ω; and *S* represents an area of the sulfide-based solid electrolyte membrane, in cm².
(3) Oxidative decomposition voltage: the sulfide-based solid electrolyte membrane of each of Examples 1 to 7 and Comparative Examples 1 to 7 was subjected to a linear sweep voltammetry (LSV) test using a multi-channel electrochemical workstation (VMP-300). A current-voltage relationship of the sulfide-based solid electrolyte membrane of each of Examples 1 to 7 and Comparative Examples 1 to 7 was measured over a voltage range of 0 to 6.0 V at a scan rate of 1 mV/s. The current-voltage curve was analyzed to obtain a voltage value at which oxidative decomposition of the sulfide-based solid electrolyte membrane begins.
(4) Tensile strength: the sulfide-based solid electrolyte membrane of each of Example 1 to 7 and Comparative Examples 1 to 7 was made into a uniform film with a length of 70 mm, a width of 10 mm and a thickness of 0.1 mm. The prepared film was clamped to a fixture of a universal testing machine (MTS E43.104), and a tensile force was applied to both ends of the sample using a universal tensile tester to obtain a stress-strain curve, from which the tensile strength and elongation at break were derived to evaluate the tensile properties of the sulfide-based solid electrolyte membrane.

**Table 1. Chemical composition and physicochemical properties of the solid sulfide electrolyte membranes of Examples 1 to 7**

| item | chemical composition | physicochemical properties | | | |
|---|---|---|---|---|---|
| | | Thickness (µm) | room-temperature ionic conductivity (mS·cm⁻¹) | oxidative decomposition voltage (V vs Li/Li⁺) | tensile strength (MPa) |
| Example 1 | [Li*₈*GeS*₆*] *₃C_{0.000221}*O*_{0.000086}*S_{0.000157}H*_{0.000031}* | 15 | 0.5 | 5.65 | 10 |
| Example 2 | [Li*₄*SiS*₄*]*₃₈*C*_{0.0122}* S*_{0.0003}*H*_{0.0010}*N*_{0.0047}* | 20 | 8 | 6.0 | 100 |
| Example 3 | [Li*₈*SeS*₆*]*_{24.5}*C_{0.0075}O_{0.0027}S_{0.0027}H _{0.0006}N_{0.0010} | 22 | 5 | 5.8 | 80 |
| Example 4 | [Li*₇*SnS*_{5.5}*]*_{25.6}*C*_{0.0017}*O*_{0.0009}*S*_{0.0006 3}H_{0.00029}* | 28 | 6 | 5.7 | 60 |
| Example 5 | [Li*_{3.4}*Si*_{1.1}*S*_{5.5}*]*₇₁*C*_{0.016}*O*_{0.0104}S_{0.000 11}*H*_{0.002}*N*_{2.5*10}⁻⁶* | 31 | 6.5 | 5.9 | 30 |
| Example 6 | [Li*_{7.6}*SnS*_{5.8}*]*₂₆*C*_{0.00064}*O*_{0.00019}*S*_{0.00 038}*H*_{0.000089}*N*_{8.3*10}⁻⁷*Li*_{0.000039}* | 18 | 7 | 5.5 | 65 |
| Example 7 | [Na*_{7.6}*SnS*_{5.8}*]*₂₆*C*_{0.00064}*O*_{0.00019}*S*_{0.0 0038}*H*_{0.000089}*N*_{8.3*10}⁻⁷*Na*_{.000039}* | 18 | 7 | 5.5 (V vs Na/Na⁺) | 65 |

**Table 2. Chemical composition and physicochemical properties of sulfide-based solid electrolyte membranes of Comparative Examples 1 to 7**

| item | chemical composition | physicochemical properties | | | |
|---|---|---|---|---|---|
| | | Thickness (µm) | room-temperature ionic conductivity (mS· cm⁻¹) | oxidative decomposition voltage (V vs Li/Li⁺) | tensile strength (MPa) |
| Comparative Example 1 | [Li*₈*GeS*₆*]_{30.9} [PTFE] | 15.4 | 0.06 | 5.12 | 2.9 |
| Comparative Example 2 | [Li*₄*SiS*₄*]_{3.8} [PTFE] | 20.2 | 0.08 | 5.2 | 47.2 |
| Comparative Example 3 | [Li*₈*SeS*₆*]_{4.9} [PTFE] | 21.7 | 0.07 | 5.0 | 36.6 |
| Comparative Example 4 | [Li*₇*SnS*_{5.5}*]_{6.2} [PTFE] | 28.6 | 0.07 | 5.1 | 20.7 |
| Comparative Example 5 | [Li*_{3.4}*Si*_{1.1}*S*_{5.5}*]_{13.0} [PTFE] | 31.3 | 0.08 | 4.9 | 15.6 |
| Comparative Example 6 | [Li*_{7.6}*SnS*_{5.8}*]_{15.8} [PTFE] | 18.3 | 0.07 | 5.0 | 17.4 |
| Comparative Example 7 | [Na*_{7.6}*SnS*_{5.8}*]_{15.8} [PTFE] | 18.3 | 0.07 | 5.0 (V vs Na/Na⁺) | 17.4 |

From comparisons between Example 1 and Comparative Example 1, Example 2 and Comparative Example 2, Example 3 and Comparative Example 3, Example 4 and Comparative Example 4, Example 5 and Comparative Example 5, Example 6 and Comparative Example 6, and Example 7 and Comparative Example 7 as shown in Table 1 and Table 2, it can be seen that the room-temperature ionic conductivity, the oxidative decomposition voltage, and the tensile strength of the sulfide-based solid electrolyte membranes of Examples 1 to 7 are all significantly higher than those of the sulfide-based solid electrolyte membranes of Comparative Examples 1 to 7.

Performance Test II: the capacity retention rate was tested for the all-solid-state battery of each of Application Examples 1 to 7 and Comparative Examples 1 to 7, and the results are as follows.

Comparison between Application Example 1 and Comparative Application Example 1: charging and discharging tests were conducted within a voltage range of 2.7 to 5.1 V (vs. Li⁺/Li) at a rate of 0.1 C, the capacity retention rate of lithium nickel manganese oxide/Li all-solid-state lithium-ion battery of Application Example 1 was 90% after 800 cycles, while the capacity retention rate of the all-solid-state lithium-ion battery of Comparative Application Example 1 was only 30%. The mechanism by which the cycling performance of the battery of Application Example 1 is improved lies in that in the sulfide-based solid electrolyte membrane with PTFE as the binder of Comparative Example 1, the solid sulfide particles are only physically coated by PTFE, and no covalent bonds are formed. Consequently, the high-voltage stability of the sulfide-based solid electrolyte membrane of Comparative Example 1 is poor, resulting in a low capacity retention rate of the all-solid-state lithium-ion battery of Comparative Application Example 1. In contrast to the sulfide-based solid electrolyte membrane with PTFE as the binder of Comparative Example 1, the surface of the sulfide particles in Example 1 have S-S bonds, due to the presence of S-S bonds on the surface of the sulfide particles, the electron cloud density on S atom increases significantly, enhancing the interaction force between S atom and Li ion, and the strong interaction force between the S atom and the Li ion kinetically restricts the escape of the Li⁺ from the electrolyte and suppresses the oxidation of S²⁻ under high-voltage condition, thereby improving the high-voltage stability of the sulfide-based solid electrolyte membrane and significantly improving the capacity retention rate of the all-solid-state lithium-ion battery of Application Example 1.

Comparison between Application Example 2 and Comparative Application Example 2: as shown in FIG. 2, charging and discharging tests were conducted within a voltage range of 2.7 to 5.1 V (vs. Li⁺/Li) at a rate of 0.2 C, the capacity retention rate of LiNi_{0.8}Co_{0.1}Mn_{0.1}O₂/Li all-solid-state lithium-ion battery of Application Example 2 was 98% after 100 cycles, while the capacity retention rate of the all-solid-state lithium-ion battery of Comparative Application Example 2 was only 80%. The mechanism by which the cycling performance of the battery of Application Example 2 is improved lies in that in the sulfide-based solid electrolyte membrane with PTFE as the binder of Comparative Example 2, the solid sulfide particles are only physically coated by PTFE, and no covalent bonds are formed. Consequently, the high-voltage stability of the sulfide-based solid electrolyte membrane of Comparative Example 2 is poor, resulting in a low capacity retention rate of the all-solid-state lithium-ion battery of Comparative Application Example 2. In contrast to the sulfide-based solid electrolyte membrane with PTFE as the binder of Comparative Example 2, the surface of the sulfide particles in Example 2 have S-S bonds, due to the presence of S-S bonds on the surface of the sulfide particles, the electron cloud density on S atom increases significantly, enhancing the interaction force between S atom and Li ion, and the strong interaction force between the S atom and the Li ion kinetically restricts the escape of the Li⁺ from the electrolyte and suppresses the oxidation of S²⁻ under high-voltage condition, thereby improving the high-voltage stability of the sulfide-based solid electrolyte and significantly improving the capacity retention rate of the all-solid-state lithium-ion battery of Application Example 2.

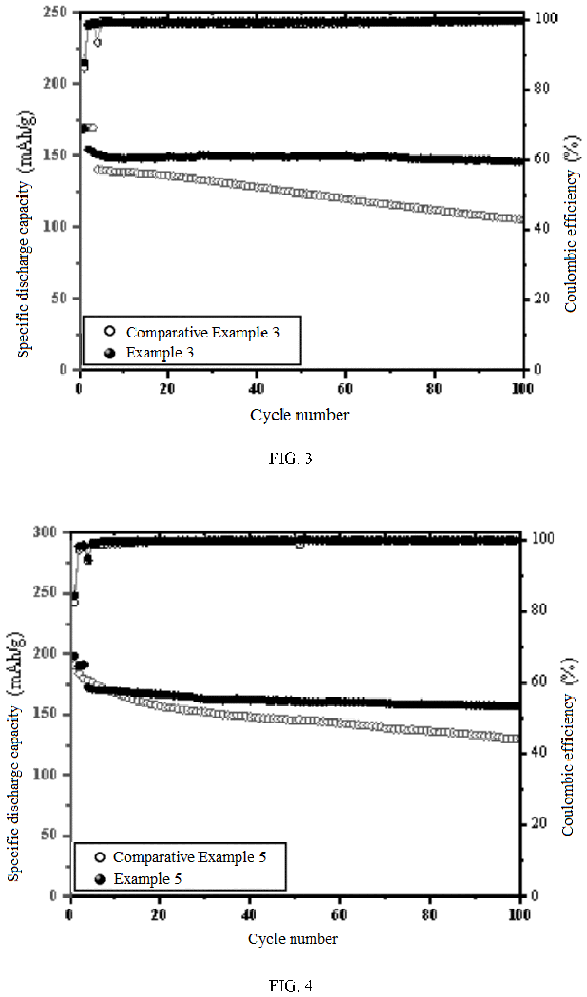

Comparison between Application Example 3 and Comparative Application Example 3: as shown in FIG. 3, charging and discharging tests were conducted within a voltage range of 2.7 to 5.1 V (vs. Li⁺/Li) at a rate of 0.5 C, the capacity retention rate of LiCoO₂/Li all-solid-state lithium-ion battery of Application Example 3 was 99% after 100 cycles, while the capacity retention rate of the all-solid-state lithium-ion battery of Comparative Application Example 3 was only 74%. The mechanism by which the cycling performance of the battery of Application Example 3 is improved lies in that in the sulfide-based solid electrolyte membrane with PTFE as the binder of Comparative Example 3, the solid sulfide particles are only physically coated by PTFE, and no covalent bonds are formed. Consequently, the high-voltage stability of the sulfide-based solid electrolyte membrane of Comparative Example 3 is poor, resulting in a low capacity retention rate of the all-solid-state lithium-ion battery of Comparative Application Example 3. In contrast to the sulfide-based solid electrolyte membrane with PTFE as the binder of Comparative Example 3, the surface of the sulfide particles in Example 3 have S-S bonds, due to the presence of S-S bonds on the surface of the sulfide particles, the electron cloud density on S atom increases significantly, enhancing the interaction force between S atom and Li ion, and the strong interaction force between the S atom and the Li ion kinetically restricts the escape of the Li⁺ from the electrolyte and suppresses the oxidation of S²⁻ under high-voltage condition, thereby improving the high-voltage stability of the sulfide-based solid electrolyte and significantly improving the capacity retention rate of the all-solid-state lithium-ion battery of Application Example 3.

Comparison between Application Example 4 and Comparative Application Example 4: charging and discharging tests were conducted within a voltage range of 2.7 to 5.1 V (vs. Li⁺/Li) at a rate of 0.1 C, the capacity retention rate of LiCoO₂/nano-Si all-solid-state lithium-ion battery of Application Example 4 was 96% after 300 cycles, while the capacity retention rate of the all-solid-state lithium-ion battery of Comparative Application Example 4 was only 51%. The mechanism by which the cycling performance of the battery of Application Example 4 is improved lies in that in the sulfide-based solid electrolyte membrane with PTFE as the binder of Comparative Example 4, the solid sulfide particles are only physically coated by PTFE, and no covalent bonds are formed. Consequently, the high-voltage stability of the sulfide-based solid electrolyte membrane of Comparative Example 4 is poor, resulting in a low capacity retention rate of the all-solid-state lithium-ion battery of Comparative Application Example 4. In contrast to the sulfide-based solid electrolyte membrane with PTFE as the binder of Comparative Example 4, the surface of the sulfide particles in Example 4 have S-S bonds, due to the presence of S-S bonds on the surface of the sulfide particles, the electron cloud density on S atom increases significantly, enhancing the interaction force between S atom and Li ion, and the strong interaction force between the S atom and the Li ion kinetically restricts the escape of the Li⁺ from the electrolyte and suppresses the oxidation of S²⁻ under high-voltage condition, thereby improving the high-voltage stability of the sulfide-based solid electrolyte and significantly improving the capacity retention rate of the all-solid-state lithium-ion battery of Application Example 4.

Comparison between Application Example 5 and Comparative Application Example 5: as shown in FIG. 4, charging and discharging tests were conducted within a voltage range of 2.7 to 5.1 V (vs. Li⁺/Li) at a rate of 0.1 C, the capacity retention rate of LiNi_{0.8}Co_{0.1}Mn_{0.1}O₂/nano-Si all-solid-state battery of Application Example 5 was 97% after 100 cycles, while the capacity retention rate of the all-solid-state lithium-ion battery of Comparative Application Example 5 was only 65%. The mechanism by which the cycling performance of the battery of Application Example 5 is improved lies in that in the sulfide-based solid electrolyte membrane with PTFE as the binder of Comparative Example 5, the solid sulfide particles are only physically coated by PTFE, and no covalent bonds are formed. Consequently, the high-voltage stability of the sulfide-based solid electrolyte membrane of Comparative Example 5 is poor, resulting in a low capacity retention rate of the all-solid-state lithium-ion battery of Comparative Application Example 5. In contrast to the sulfide-based solid electrolyte membrane with PTFE as the binder of Comparative Example 5, the surface of the sulfide particles in Example 5 have S-S bonds, due to the presence of S-S bonds on the surface of the sulfide particles, the electron cloud density on S atom increases significantly, enhancing the interaction force between S atom and Li ion, and the strong interaction force between the S atom and the Li ion kinetically restricts the escape of the Li⁺ from the electrolyte and suppresses the oxidation of S²⁻ under high-voltage condition, thereby improving the high-voltage stability of the sulfide-based solid electrolyte and significantly improving the capacity retention rate of the all-solid-state lithium-ion battery of Application Example 5.

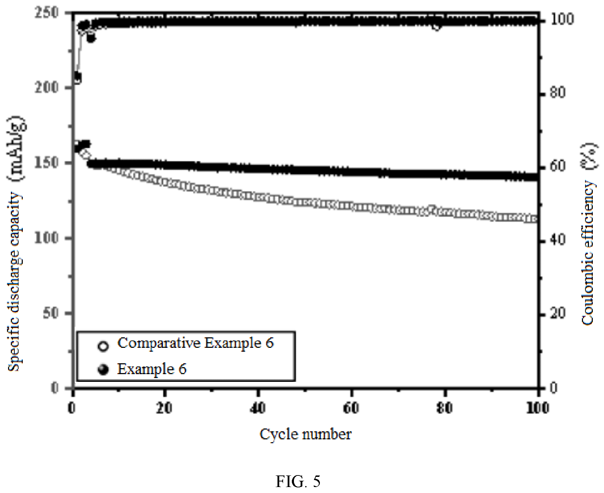

Comparison between Application Example 6 and Comparative Application Example 6: as shown in FIG. 5, charging and discharging tests were conducted within a voltage range of 2.7 to 5.1 V (vs. Li⁺/Li) at a rate of 0.1 C, the capacity retention rate of LiCoO₂/µm-Si all-solid-state lithium-ion battery of Application Example 6 was 94% after 100 cycles, while the capacity retention rate of the all-solid-state lithium-ion battery of Comparative Application Example 6 was only 75%. The mechanism by which the cycling performance of the battery of Application Example 6 is improved lies in that in the sulfide-based solid electrolyte membrane with PTFE as the binder of Comparative Example 6, the solid sulfide particles are only physically coated by PTFE, and no covalent bonds are formed. Consequently, the high-voltage stability of the sulfide-based solid electrolyte membrane of Comparative Example 6 is poor, resulting in a low capacity retention rate of the all-solid-state lithium-ion battery of Comparative Application Example 6. In contrast to the sulfide-based solid electrolyte membrane with PTFE as the binder of Comparative Example 6, the surface of the sulfide particles in Example 6 have S-S bonds, due to the presence of S-S bonds on the surface of the sulfide particles, the electron cloud density on S atom increases significantly, enhancing the interaction force between S atom and Li ion, and the strong interaction force between the S atom and the Li ion kinetically restricts the escape of the Li⁺ from the electrolyte and suppresses the oxidation of S²⁻ under high-voltage condition, thereby improving the high-voltage stability of the sulfide-based solid electrolyte and significantly improving the capacity retention rate of the all-solid-state lithium-ion battery of Application Example 6.

Comparison between Application Example 7 and Comparative Application Example 7: charging and discharging tests were conducted within a voltage range of 2.0 to 4.1 V (vs. Na/Na⁺) at a rate of 0.1 C, the capacity retention rate of NaCoO₂/µm-Si all-solid-state battery of Application Example 7 was 90% after 50 cycles, while the capacity retention rate of the all-solid-state sodium-ion battery of Comparative Application Example 7 was only 70%. The mechanism by which the cycling performance of the battery of Application Example 7 is improved lies in that in the sulfide-based solid electrolyte membrane with PTFE as the binder of Comparative Example 7, the solid sulfide particles are only physically coated by PTFE, and no covalent bonds are formed. Consequently, the high-voltage stability of the sulfide-based solid electrolyte membrane of Comparative Example 7 is poor, resulting in a low capacity retention rate of the all-solid-state lithium-ion battery of Comparative Application Example 7. In contrast to the sulfide-based solid electrolyte membrane with PTFE as the binder of Comparative Example 7, the surface of the sulfide particles in Example 7 have S-S bonds, due to the presence of S-S bonds on the surface of the sulfide particles, the electron cloud density on S atom increases significantly, enhancing the interaction force between S atom and Na ion, and the strong interaction force between the S atom and the Li ion kinetically restricts the escape of the Na⁺ from the electrolyte and suppresses the oxidation of S²⁻ under high-voltage condition, thereby improving the high-voltage stability of the sulfide-based solid electrolyte and significantly improving the capacity retention rate of the all-solid-state lithium-ion battery of Application Example 7.

Reference throughout the present disclosure to "an embodiment", "some embodiments", "an example", "a specific example", or "some examples" means that a particular feature, structure, material, or characteristic described in connection with the embodiment or example is included in at least one embodiment or example of the present disclosure. Thus, the appearances of the phrases such as "in an embodiment", "in some embodiments", "in an example", "in a specific example", or "in some examples" in various places throughout the present disclosure are not necessarily referring to the same embodiment or example of the present disclosure. Furthermore, the described particular features, structures, materials, or characteristics may be combined in any suitable manner in one or more embodiments or examples. In addition, those skilled in the art may combine different embodiments or examples described in this specification and may combine the features of the different embodiments or examples, without contradiction.

Although some embodiments of the present disclosure have been shown and described, it would be appreciated by those skilled in the art that the above embodiments are illustrative and cannot be construed to limit the present disclosure, and changes, modifications, alternatives and variants can be made by those skilled in the art without departing from the scope of the present disclosure.

## Claims

1. A sulfide-based solid electrolyte membrane, composed of sulfide particles having a polymer coating, wherein the sulfide particles having the polymer coating have a chemical composition of [E*ₘ*M*ₙ*S*ₒ*] C*_{α}*O*_{β}*S*_{γ}*H*_{δ}*N*_{ζ}*E*ₐ*, where [EₘMₙSₒ] represents the sulfide particle, E is selected from Li⁺ or Na⁺, M is selected from Si⁴⁺, Ge⁴⁺, Se⁴⁺ or Sn⁴⁺, 3≤*m*≤8, 1≤*n*≤2, 2≤*o*≤8; C*_{α}*O*_{β}*S*_{γ}*H*_{δ}*N*_{ζ}*E*ₐ* represents the polymer coating that forms a disulfide bond with the sulfide particle at a surface of the sulfide particle, *α* is selected from 0.0001 to 1, *β* is selected from 0 to 0.5, *γ* is selected from 0.000001 to 1, *δ* is selected from 0.00001 to 2, *ζ* is selected from 0 to 0.01, and *a* is selected from 0 to 0.0001.

2. The sulfide-based solid electrolyte membrane according to claim 1, wherein based on a total mass of the sulfide-based solid electrolyte membrane of 100%, a mass fraction of the sulfide particles is in a range of 80 to 99%, and a mass fraction of the polymer coating is in a range of 1 to 20%.

3. The sulfide-based solid electrolyte membrane according to claim 1 or 2, having a thickness of 15 to 35 µm.

4. A method for preparing the sulfide-based solid electrolyte membrane according to any one of claims 1 to 3, comprising:
S1, mixing sulfide particles with a binder, and subjecting a mixture of the sulfide particles and the binder to a ball-milling treatment in a dry atmosphere to obtain sulfide particles having a polymer coating; wherein the binder is a polymer having a terminal thiol group and a disulfide bond-containing structure; and
S2, subjecting the sulfide particles having the polymer coating to a hot-pressing treatment to obtain the sulfide-based solid electrolyte membrane.

5. The method for preparing the sulfide-based solid electrolyte membrane according to claim 4, wherein the binder in step S1 has a general structure of formula (1): 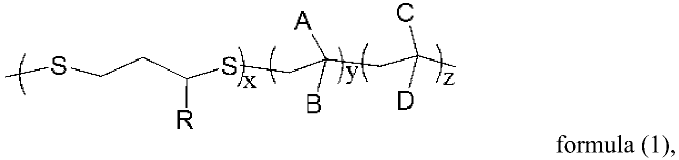
where x is selected from 10 to 1000, and y and z are each independently selected from 0 to 2000;
A and C are each independently selected from H, Cl, CN or methyl;
B and D are each independently selected from an alkoxycarbonyl group having 10 or less carbon atoms, a cyano group, a carbamoyl group, a group having 10 or less carbon atoms and having a terminal carboxylate structure, a group of formula (2), a group of formula (3), or a group of formula (4), wherein w in formula (2) and w in formula (3) are each independently selected from 0 to 100; 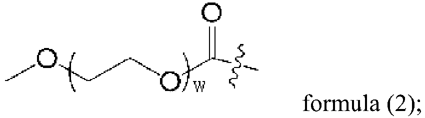 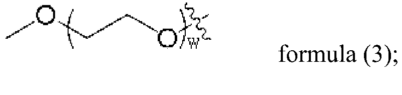 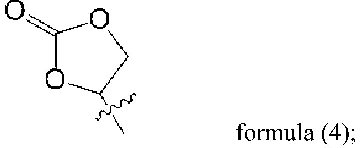
where R is selected from an alkyl group having 10 or less carbon atoms and having a terminal mercapto group, a terminal hydroxyl group, a terminal methylsulfonyl group, a terminal cyano group, a terminal alkoxyphosphoryl group, a terminal carboxylic acid group or a terminal carboxylic acid derivative group.

6. The method for preparing the sulfide-based solid electrolyte membrane according to claim 4, wherein in step S1, a mass ratio of the sulfide particles to the binder is (80-99): (1-20).

7. The method for preparing the sulfide-based solid electrolyte membrane according to claim 4, wherein in step S1, the ball-milling treatment is performed at a speed of 2000 r/min or more for 1 h or more.

8. The method for preparing the sulfide-based solid electrolyte membrane according to claim 7, wherein in step S1, the ball-milling treatment is performed at a speed of 2000 to 10000 r/min for 1 to 24 h.

9. The method for preparing the sulfide-based solid electrolyte membrane according to claim 4, wherein in step S2, the hot-pressing treatment is performed at a pressure of 100 MPa or higher.

10. An all-solid-state alkali metal ion battery, comprising the sulfide-based solid electrolyte membrane according to any one of claims 1 to 3 or the sulfide-based solid electrolyte membrane prepared by the method according to any one of claims 4 to 9.
